(19) Europäisches Patentamt
European Patent Office
Office européen des brevets

(11) Veröffentlichungsnummer: **0 272 216 B1**

(12) # EUROPÄISCHE PATENTSCHRIFT

(45) Veröffentlichungstag der Patentschrift: **19.08.92**

(51) Int. Cl.[5]: **C09B 67/22**, C08K 5/34, //C09B57/04

(21) Anmeldenummer: **87810743.2**

(22) Anmeldetag: **11.12.87**

(54) **Neue Stoffzusammensetzungen auf der Basis von Tetrachlorisoindolinonpigmenten.**

(30) Priorität: **17.12.86 CH 5054/86**

(43) Veröffentlichungstag der Anmeldung:
**22.06.88 Patentblatt 88/25**

(45) Bekanntmachung des Hinweises auf die Patenterteilung:
**19.08.92 Patentblatt 92/34**

(84) Benannte Vertragsstaaten:
**DE FR GB IT**

(56) Entgegenhaltungen:
**DE-A- 1 914 271**

(73) Patentinhaber: **CIBA-GEIGY AG**
**Klybeckstrasse 141**
**CH-4002 Basel(CH)**

(72) Erfinder: **von der Crone, Jost, Dr.**
**La Dey**
**CH-1711 Arconciel(CH)**
Erfinder: **Medinger, Bernhard, Dr.**
**Grottenweg**
**CH-1711 Giffers(CH)**
Erfinder: **Bugnon, Philippe, Dr.**
**La Chenalyete**
**CH-1724 Essert(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft Stoffzusammensetzungen enthaltend ein Bis-(tetrachlorisoindolinon)-pigment und eine sulfonierte Mono-(tetrachlorisoindolinon)-verbindung, sowie ihre Verwendung zum Färben von hochmolekularem organischem Material.

Die Tetrachlorisoindolinonpigmente, die schon lange zum Färben von hochmolekularem organischem Material eingesetzt werden (vgl. z.B. DE-AS 1 098 126 und DE-OS 1 914 271), erfüllen, insbesondere bezüglich ihres rheologischen Verhaltens, nicht immer die Erfordernisse der modernen Technik.

Es wurde nun gefunden, dass durch Zusatz von bestimmten sulfonierten Mono-(tetrachlorisoindolinon)-verbindungen zu Bis-(tetrachlorisoindolinon)-pigmenten das rheologische Verhalten der letzteren überraschend verbessert wird.

Die vorliegende Erfindung betrifft demnach eine Stoffzusammensetzung enthaltend

a) ein Isoindolinonpigment der Formel I

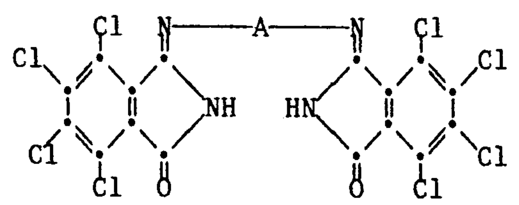

(I),

worin A eine der Gruppen der Formeln

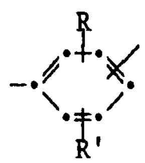

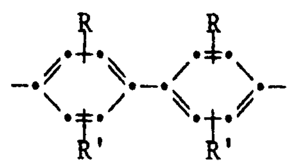

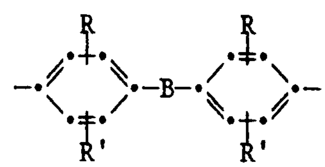

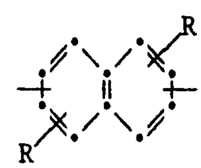

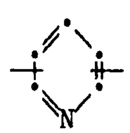

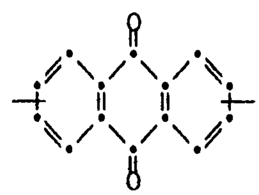

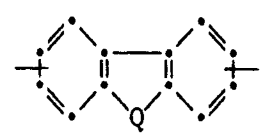

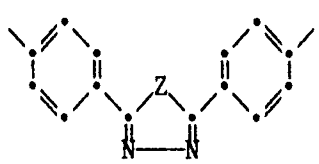

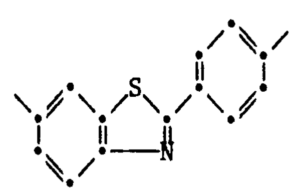

oder

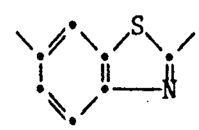

ist, worin B -O-, -S-, $-SO_2-$, -N=N-, $-CH_2-$, -CH=CH-, $-O-CH_2-O-$,

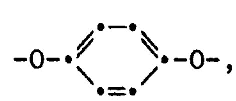

-CONH-, -NHCONH- oder -CONHNHCO-, Q -O- oder -NH- und Z -O- oder -S- bedeuten und R und R′ unabhängig voneinander Wasserstoff, Halogen, $C_1$-$C_4$-Alkyl, $C_1$-$C_4$-Alkoxy oder Phenoxy sind, und

b) eine Verbindung der Formel II

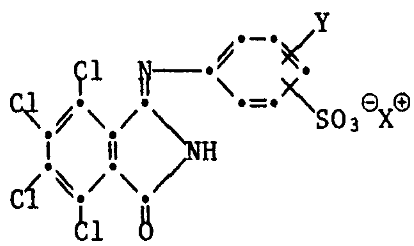

(II),

worin $X^{\oplus}$ $H^{\oplus}$ oder eine Gruppe der Formeln

$$\frac{M^{n\oplus}}{n}$$

oder $N^{\oplus}(R_1)(R_2)(R_3)(R_4)$ darstellt, $M^{n\oplus}$ ein n-wertiges Metallkation, n die Zahlen 1, 2 oder 3, $R_1$, $R_2$, $R_3$, $R_4$ unabhängig voneinander Wasserstoff, $C_1$-$C_{18}$-Alkyl, $C_5$-$C_6$-Cycloalkyl, unsubstituiertes oder durch $C_1$-$C_{18}$-Alkyl substituiertes Phenyl bedeuten oder $R_3$ und $R_4$ zusammen mit dem N-Atom eine Pyrrolidin-, Imidazolidin-, Piperidin-, Piperazin- oder Morpholinrest, oder $R_2$, $R_3$ und $R_4$ zusammen mit dem N-Atom einen Pyrrol-, Pyridin-, Picolin-, Pyrazin-, Chinolin- oder Isochinolinrest bilden und Y Wasserstoff, Halogen, Methyl oder Amino bedeutet.

Bedeuten etwaige Substituenten Halogen, so handelt es sich dabei z.B. um Fluor, vorzugsweise Brom und insbesondere Chlor.

Bedeutet R oder R′ $C_1$-$C_4$-Alkyl, so meint man damit z.B. Methyl, Ethyl, n-Propyl, Isopropyl, n-Butyl, sec.-Butyl oder tert.-Butyl. Bevorzugt ist Methyl.

R und R′ stellen als $C_1$-$C_4$-Alkoxy z.B. Methoxy, Ethoxy, n-Propoxy, n-Butoxy oder sec-Butoxy dar. Bevorzugt ist Methoxy.

A bedeutet vorzugsweise eine Phenylengruppe der Formel

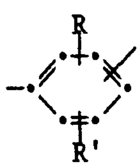

In dieser Bedeutung stellt A beispielsweise die unsubstituierte p-oder m-Phenylengruppe oder die 2-Chlor-1,4-phenylen-, 2-Methyl-1,4-phenylen-, 2-Ethyl-1,4-phenylen-, 2-n-Propyl-1,4-phenylen-, 2-Isopropyl-1,4-phenylen-, 2-tert.-Butyl-1,4-phenylen-, 2-Methoxy-1,4-phenylen-, 2-Ethoxy-1,4-phenylen-, 2-tert.-Butoxy-1,4-phenylen-, 2,5-Dichlor-1,4-phenylen-, 2,5-Dimethyl-1,4-phenylen-, 2,5-Diethyl-1,4-phenylen-, 2,5-Dimethoxy-1,4-phenylen-, 2,5-Diethoxy-1,4-phenylen-, 2-Chlor-5-methyl-1,4-phenylen-, 2-Chlor-5-methoxy-1,4-phenylen-,2-Methyl-5-methoxy-1,4-phenylen-, 2,6-Dichlor-1,4-phenylen-, 2,6-Dimethyl-1,4-phenylen-, 2-Chlor-6-methoxy-1,4-phenylen-, 2-Chlor-1,3-phenylen-, 2-Methyl-1,3-phenylen-, 2-Methoxy-1,3-phenylen-, 2,5-Dichlor-1,3-phenylen, 2,5-Dimethyl-1,3-phenylen- oder 2-Chlor-5-methyl-1,3-phenylengruppe, insbesondere jedoch eine mit Chloratomen, Methyl-, Methoxy- oder Ethoxygruppen in 2-Stellung monosubstituierte oder in 2,5-Stellung gleich oder verschieden mit Chloratomen, Methyl-, Methoxy- oder Ethoxygruppen disubstituierte 1,4-Phenylengruppe dar. Bevorzugt ist die unsubstituierte p-Phenylengruppe.

Bedeutet A eine Gruppe der Formel

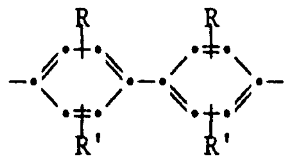 ,

so handelt es sich beispielsweise um die unsubstituierte 4,4′-Biphenylylengruppe, oder die 3,3′-Dichlor-, 3,3′-Dimethyl-, 3,3′-Diethyl-, 3,3′-Diisopropyl-, 3,3′-Di-n-butyl-, 3,3′-Di-tert.-butyl-, 3,3′-Dimethoxy-, 3,3′-Diethoxy-, 3,3′-Di-tert.-butoxy-, 3,3′,5,5′-Tetrachlor-, 3,3′,5,5′-Tetramethyl-, 3,3′,5,5′-Tetramethoxy-, 3,3′-Dichlor-5,5′-dimethyl-, 3,3′-Dichlor-5,5′-dimethoxy-, 3,3′-Dimethyl-5,5′-methoxy-4,4′-biphenylylengruppe, insbesondere jedoch um eine mit Chloratomen, Methyl-, Methoxy- oder Ethoxygruppen in 3,3′-Stellung gleich disubstituierte 4,4′-Biphenylylengruppe.

Stellt A eine Gruppe der Formel

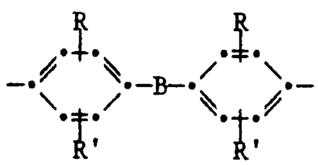 dar,

so handelt es sich beispielsweise um gegebenenfalls entsprechend den obengenannten Biphenylylenderivaten substituierte, vorzugsweise jedoch um unsubstituierte p,p′-Diphenylylenether-, p,p′-Diphenylylensulfid-, p,p′-Diphenylylen-sulfon-, p,p′-Diphenylylen-azo-, Diphenylylen-methan-, p,p′-Diphenylylen-ethen-, p,p′-Diphenylylen-dioxymethan-, p,p′-Diphenylylen-Dioxy-benzol-, p,p′-Diphenylylen-carbamid-, p,p′-Diphenylylen-harnstoff- oder p,p′-Diphenylylen-dicarbamyl-hydrazingruppen.

Weiter bedeutet A z.B. gegebenenfalls entsprechend den obengenannten Biphenylylenderivaten substituiertes, vorzugsweise jedoch unsubstituiertes 1,4-, 1,5- oder 2,6-Naphthylen, 1,5-Anthrachinondiyl, 1,4-Anthrachinondiyl, 2,6-Pyridindiyl, 2,7-Carbazoldiyl, 2,8-Dibenzofurandiyl, 3,8-Dibenzofurandiyl, 3,7-Dibenzofurandiyl, 6,4′-(2-Phenyl)-benzthiazoldiyl, 2,6-Benzthiazoldiyl, 4′,4″-(2,5-Bisphenyl)-oxadiazoldiyl oder 4′,4″-(2,5-Bisphenyl)-thiadiazoldiyl.

$X^{\oplus}$ ist vorzugsweise $H^{\oplus}$ oder insbesondere eine Gruppe der Formel

$$\frac{M^{n\oplus}}{n} .$$

Stellt $X^{\oplus}$ eine Gruppe der Formel

$$\frac{M^{n\oplus}}{n}$$

dar, so handelt es sich bei $M^{n\oplus}$ beispielsweise um ein Alkali-, Erdalkali-, Aluminium- oder Uebergangsmetallkation, wie z.B. $Na^{\oplus}$, $K^{\oplus}$, $Mg^{2\oplus}$, $Ca^{2\oplus}$, $Sr^{2\oplus}$, $Ba^{2\oplus}$, $Mn^{2\oplus}$, $Cu^{2\oplus}$, $Ni^{2\oplus}$, $Cd^{2\oplus}$, $Co^{3\oplus}$, $Al^{3\oplus}$ und $Cr^{3\oplus}$, insbesondere aber um ein Alkali- oder Erdalkalikation (n = 1 oder 2) und bevorzugt um $Ca^{2\oplus}$.

Bedeuten etwaige Substituenten $C_1$-$C_{18}$-Alkyl, so handelt es sich dabei z.B. um Methyl, Ethyl, n-Propyl, Isopropyl, n-Butyl, sec.-Butyl, tert.-Butyl, n-Pentyl, tert.-Pentyl, Hexyl, Heptyl, Octyl, Decyl, Dodecyl, Tetradecyl, Hexadecyl, Heptadecyl oder Octadecyl.

Bedeuten $R_1$, $R_2$, $R_3$ und $R_4$ $C_5$-$C_6$-Cycloalkyl, dann handelt es sich z.B. um Cyclopentyl oder insbesondere um Cyclohexyl.

Als durch $C_1$-$C_{18}$-Alkyl substituiertes Phenyl, bedeuten $R_1$, $R_2$, $R_3$ und $R_4$ vorzugsweise durch $C_{12}$-$C_{18}$-Alkyl substituiertes Phenyl.

Als Beispiele für $N^{\oplus}(R_1)(R_2)(R_3)(R_4)$ seien genannt: $N^{\oplus}H_4$, $N^{\oplus}{}_3CH_3$, $N^{\oplus}H_2(CH_3)_2$, $N^{\oplus}H_3C_2H_5$, $N^{\oplus}H_2$-$(C_2H_5)_2$, $N^{\oplus}H_3C_3H_7$-iso, $N^{\oplus}H_3$-Cyclohexyl, $N^{\oplus}H_2$-(Cyclohexyl)$_2$, $N^{\oplus}H_2(CH_3)(C_6H_5)$, $N^{\oplus}H_3C_6H_5$, $N^{\oplus}H_3$-p-Octadecylphenyl und $N^{\oplus}(CH_3)_4$.

Die Tetrachlorisoindolinonpigmente der Formel I sind bekannt und können auch bekannten Methoden hergestellt werden.

Die Verbindungen der Formel II sind neu und stellen einen weiteren Gegenstand der Erfindung dar. Man erhält sie in Analogie zu an sich bekannten Verfahren, z.B. durch Kondensation von 3,4,5,6-Tetrachlor-2-cyanbenzosäure-niederalkylester, bevorzugt -methylester, mit einem Amin der Formel

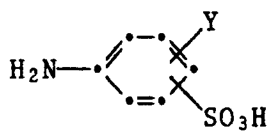,

worin Y die oben angegebene Bedeutung hat, im Molverhältnis 1:1, unter Ausschluss von Wasser, in einem polaren organischen Lösungsmittel, vorzugsweise Methanol, Ethanol oder Isopropanol, und in Gegenwart einer Base, wie z.B. Natriummethylat oder Natriumethylat, und gegebenenfalls durch anschliessende Umsetzung mit einem Salz $X^{\oplus}L^{\ominus}$, worin $X^{\oplus}$ eine der Gruppen

$$\frac{M^{n\oplus}}{n}$$

oder $N^{\oplus}(R_1)(R_2)(R_3)(R_4)$ mit der oben angegebenen Bedeutung ist und $L^{\ominus}$ z.B. ein Hydroxy-, Chlorid-, Acetat- oder Nitrat-Ion bedeutet.

Zur Herstellung der erfindungsgemässen Stoffzusammensetzung wird zweckmässig die Komponente a) zuerst nach üblichen Methoden konditioniert und in Wasser suspendiert. Die Komponente b) wird im allgemeinen als freie Sulfosäure zugefügt und das Salz $X^{\oplus}L^{\ominus}$ zur Fällung zugesetzt. Es ist auch möglich die Komponente b) direkt in Salzform in wässriger Suspension mit der Komponente a) zu mischen.

Die Mengenverhältnisse der Komponenten der erfindungsgemässen Stoffzusammensetzungen können beliebig variieren. Bevorzugte Mengenverhältnisse betragen jedoch 1 bis 10 Gew.% der Komponente b) zu 99 bis 90 Gew.% der Komponente a), insbesondere aber 2 bis 8 Gew.% der Komponente b) zu 98 bis 92 Gew.% der Komponente a) und bevorzugt 4 bis 6 Gew.% der Komponente b) zu 96 bis 94 Gew.% der Komponente a).

Die Zugabe der Komponente b) erfolgt wie bereits erwähnt vorzugsweise nach der Konditionierung der Komponente a). Unter Konditionierung versteht man die Herstellung einer feinen Partikelform, beispielsweise durch alkalische Umfällung, Trockenmahlung mit oder ohne Salz, Lösungsmittel- oder wässrige Mahlung der Salzknetung.

Je nach Konditionierverfahren oder Applikationszweck kann es von Vorteil sein, dem Pigment neben dem erfindungsgemässen Zusatz der Komponente b) gewisse Mengen an texturverbessernden Mitteln vor oder nach dem Konditionierprozess zuzufügen. Als solche kommen insbesondere Fettsäuren mit mindestens 18 C-Atomen, beispielsweise Stearin-oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.%, insbesondere 2-15 Gew.%, bezogen auf das Endprodukt, zugesetzt.

Die erfindungsgemässen Stoffkompositionen eignen sich als Pigmente zum Färben von hochmolekularem organischem Material.

Hochmolekulare organische Materialien, die mit den erfindungsgemässen Stoffzusammensetzungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Stoffzusammensetzungen als Toner oder in form von Präparaten einzusetzen. Bezogen auf das zu pigmentierende hochmolekulare organische Material kann man die erfindungsgemässen Stoffzusammensetzungen in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Stoffzusammensetzungen in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Stoffzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie gute Dispergierbarkeit, hohe Transparenz, gute Ueberlackier-, Migrations-, Hitze-, Licht- und Wetterbeständigkeit, sowie Verzugsfreiheit in Kunststoffen, aus.

Ausserdem weisen die erfindungsgemässen Stoffzusammensetzungen im Vergleich zu unmodifzierten Tetrachlorisoindolinonpigmenten insbesondere in Lacken und Druckfarben eine verbesserte Rheologie, geringere Trenneffekte, wie Ausschwimmen bei der Mitverwendung von Weisspigmenten und geringere Flokkulationstendenz, auf.

Infolge der guten rheologischen Eigenschaften der erfindungsgemässen Pigmentmischungen ist es möglich, Lacke hoher Pigmentkonzentration (high loadings) herzustellen.

Die erfindungsgemässen Stoffzusammensetzungen eignen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Die nachfolgenden Beispiele dienen zur Erläuterung der Erfindung.

Beispiel 1a): In eine Lösung aus 40 ml Methanol und 1,08 g Natriummethylat werden 6,0 g 3,4,5,6-Tetrachlor-2-cyanbenzoesäuremethylester eingetragen. Das Gemisch wird eine halbe Stunde gerührt. Dann wird eine Lösung aus 3,46 g Metanilsäure, 1,08 g Natriummethylat und 30 ml Methanol zugegeben, und 15 Stunden bei Raumtemperatur gerührt. Anschliessend wird unter Rühren 3 Stunden am Rückfluss gekocht, mit 2,5 ml Essigsäure sauer gestellt und nochmals 2 Stunden am Rückfluss gekocht. Das Reaktionsprodukt wird bei Raumtemperatur abfiltriert, mit wenig Methanol gewaschen und getrocknet. Man erhält 7,0 g eines gelben Farbstoffes der Formel

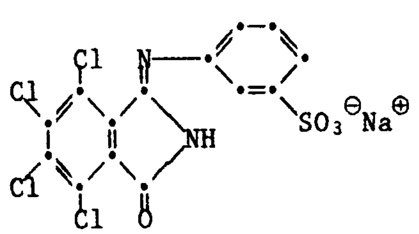

Analyse für $C_{14}H_5Cl_4N_2O_4SNa$

| | C | H | N | S |
|---|---|---|---|---|
| Berechnet: | 36,36 % | 1,08 % | 6,06 % | 6,93 % |
| Gefunden : | 35,55 % | 1,61 % | 5,83 % | 6,98 % |

b) 4,4 g des wie unter a) beschrieben erhaltenen gelben Farbstoffes werden im 200 ml Wasser unter Rühren auf 70 °C erwärmt. Man fügt eine Lösung von 8,74 g $CaCl_2 \bullet 2H_2O$ in 50 ml Wasser hinzu und rührt 30 Minuten bei 70 °C weiter. Der erhaltene gelbe Farbstoff wird warm abfiltriert, mit Wasser gewaschen und getrocknet. Man erhält 3,5 g des Calciumsalzes der Formel

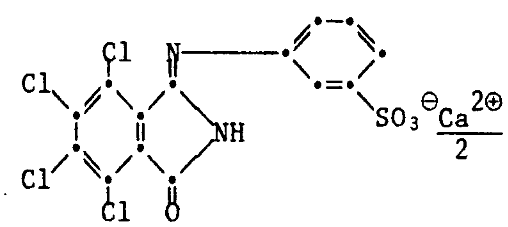

Beispiel 2: 6,0 g 3,4,5,6-Tetrachlor-2-cyanbenzoesäuremethylester werden wie in Beispiel 1 beschrieben mit 1,08 g Natriummethylat in 40 ml Methanol umgesetzt. In die erhaltene Lösung werden 1,9 g 1,4-Phenylendiamin-2-sulfosäure, 0,54 g Natriummethylat und 30 ml Methanol zugegeben. Es ensteht eine orangebraune Lösung, die 3 Stunden bei Raumtemperatur gerührt wird. Dann wird unter Rühren 3 Stunden am Rückfluss gekocht, mit 2,5 ml Essigsäure sauer gestellt und nochmals 2 Stunden am Rückfluss gekocht. Das ausgefallene Reaktionsprodukt wird heiss abfiltriert, mit wenig Methanol gewaschen und getrocknet. Man erhält 4,1 g eines gelben Farbstoffs der Formel

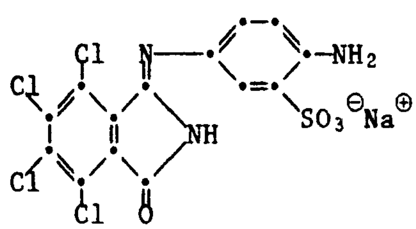

Analyse für $C_{14}H_6Cl_4N_3O_4SNa$

| | C | H | N | S | Cl |
|---|---|---|---|---|---|
| Berechnet: | 35,25 % | 1,27 % | 8,81 % | 6,72 % | 29,72 % |
| Gefunden : | 35,07 % | 1,99 % | 8,33 % | 6,2 % | 28,5 % |

Beispiel 3: 6,0 g 3,4,5,6-Tetrachlor-2-cyanbenzoesäuremethylester werden wie in Beispiel 2 beschrieben mit 1,08 g Natriummethylat in 40 ml Methanol umgesetzt. Man gibt eine Suspension von 4,2 g 1,3-Phenylendiamin-4-sulfonsäure-natriumsalz in 60 ml methanol zu, rührt 16 Stunden bei Raumtemperatur und erhitzt anschliessend 3 Stunden auf Rückflusstemperatur. Das Reaktionsgemisch wird mit 5 ml Eisessig sauer gestellt und nochmals 2 Stunden am Rückfluss gekocht. Der Niederschlag wird heiss abfiltriert, mit wenig Methanol gewaschen und getrocknet, Man erhält 4,8 g eines grünstichig gelben Farbstoffes der

Formel

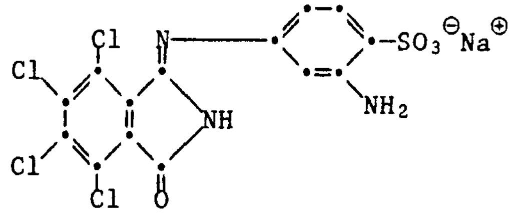

Beispiel 4:

a) 15 g Bis-[4,5,6,7-tetrachlorisoindolin-3-on-1-yliden]-phenylendiamin(1,4) werden in 150 ml Dimethylformamid bei Zimmertemperatur angeschlämmt. In die gelbe Suspension lässt man unter Rühren 50 ml einer 1N methanolischen Natriummethylatlösung einfliessen, wobei sich eine klare gelbe Lösung des Natriumsalzes des eingesetzten Isoindolins bildet. Nach einstündigem Rühren bei Raumtemperatur wird die Lösung mit 500 ml Wasser versetzt, der ausgefallene Niederschlag abfiltriert und das Nutschgut mit Wasser neutral gewaschen.

b) 17,4 g des gemäss a) erhaltenen feuchten Presskuchens (35 % Trockengehalt), werden in 100 ml Wasser suspendiert. Dann werden 0,3 g der Verbindung von Beispiel 1a) und nach einer halben Stunde Rühren bei 70-75 °C 2,4 g Calciumchlorid hinzugefügt. Nach einer weiteren halben Stunde wird die Pigmentmischung bei 70 °C filtriert und getrocknet. Man erhält 5,8 g gelbes Mischpigment.

Zur Bestimmung des Fliessverhaltens wird das so erhaltene Mischpigment nach üblicher Methode in ein Alkyd-Lacksystem (®Setal 84, Kunstharzfabriek Synthesis B.V., Holland; Festkörpergehalt: 70 Gew.%) eingearbeitet.

Das Fliessverhalten der Lackanreibung, welche 12 Gew.% Pigment und 54 Gew.% Gesamtfestkörper enthält und deren Pigment/Bindemittel-Verhältnis 0,3 beträgt, wird mit einem HAAKE-Viskosimeter ®Rotovisco RV 12 ermittelt (Messtemperatur: 25 °C, Mess-System: SV-SP, Scherbereich; D = 0-100 [l/s]. Zur einfachen Charakterisierung der Fliesskurven können aus optimalen Regressionskurven ermittelte Viskositätswerte bei D = 10 [l/s] und 100 [l/s] angegeben werden.

Für die Lackanreibung mit dem Pigmentgemisch gemäss Beispiel 4b werden folgende Viskositätswerte ermittelt:

bei D = 10 [l/s]: 708 mPa•s
bei D = 100 [l/s]: 134 mPa•s

Eine Lackanreibung mit dem getrockneten Pigment aus Beispiel 4a, ohne Zusatz gemäss 4b, ergibt folgende Viskositätswerte:

bei D = 10 [l/s]: 1370 mPa•s
bei D = 100 [l/s]: 297 mPa•s

Beispiel 5: Ersetzt man in Beispiel 4b die Verbindung aus Beispiel 1a) mit der Verbindung aus Beispiel 2, so erhält man ein gelbes Mischpigment mit ebenso gutem rheologischem Verhalten die dasjenige von Beispiel 4b.

Für die Lackanreibung mit diesem Pigmentgemisch werden folgende Viskositätswerte ermittel:

bei D = 10 [l/s]: 869 mPa•s
bei D = 100 [l/s]: 166 mPa•s

Beispiel 6: 10 g des Tetrachlorisoindolinonpigments C.I. Pigment Gelb 110, das eine spezifische Oberfläche von 22 $m^2$/g aufweist (Bestimmung gemäss BET-Methode; J. Am. Chem. Soc. 60, 309, 1938), werden in 200 ml Wasser angeschlämmt. In dieser Suspension gibt man 0,5 g der Verbindung von Beispiel 1a), rührt 30 Minuten und fügt eine Lösung von 0,66 g $CaCl_2$•$2H_2O$ in 10 ml Wasser hinzu. Nach weiteren 30 Minuten Rühren wird die Pigmentmischung filtriert und getrocknet. Man erhält 10,6 g gelbes Mischpigment.

Für die Lackanreibung mit dieser Pigmentmischung werden folgende Viskositätswerte ermittelt:

bei D = 10 [l/s]: 265 mPa•s
bei D = 100 [l/s]: 71 mPa•s

Eine Lackanreibung mit dem unbehandelten Pigment ergibt folgende Viskositätswerte

bei D = 10 [l/s]: 593 mPa•s
bei D = 100 [l/s]: 122 mPa•s

Beispiel 7: Verfährt man wie in Beispiel 6, ersetzt aber das C.I. Pigment Gelb 110 mit der gleichen Menge des Tetrachlorisoindolinonpigments C.I. Pigment Gelb 109, so erhält man 10,2 g eines grünstichig gelben

Pigmentgemisches.

Für die Lackanreibung mit dieser Pigmentmischung werden folgende Viskositätswerte ermittelt:
bei D = 10 [l/s]: 158 mPa•s
bei D = 100 [l/s]: 52 mPa•s

Eine Lackanreibung mit dem unbehandelten Pigment ergibt folgende Viskositätswerte
bei D = 10 [l/s]: 313 mPa•s
bei D = 100 [l/s]: 82 mPa•s

## Patentansprüche

**1.** Stoffzusammensetzung enthaltend

a) ein Isoindolinonpigment der Formel I

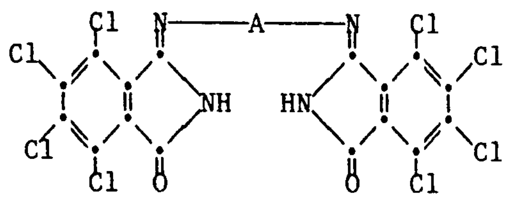 (I),

worin A eine der Gruppen der Formeln

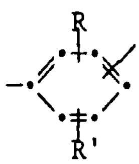

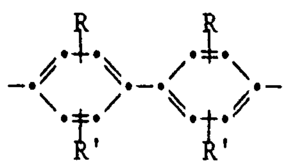

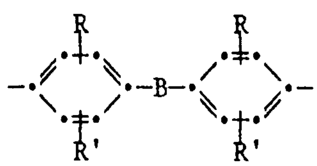

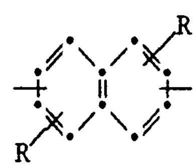

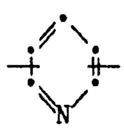

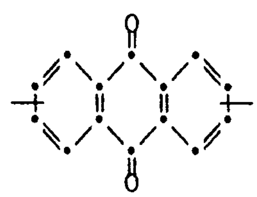

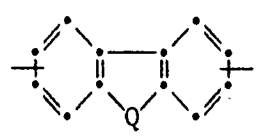

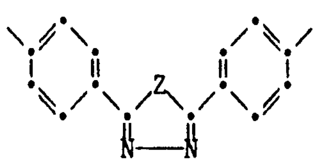

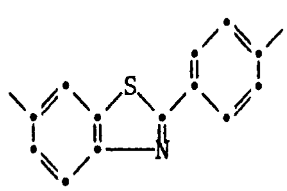 oder 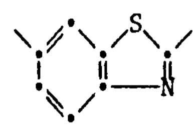

ist, worin B -O-, -S-, $-SO_2-$, -N=N-, $-CH_2-$, -CH=CH-, $-O-CH_2-O-$,

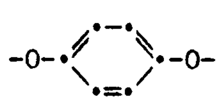,

-CONH-, -NHCONH- oder -CONHNHCO-, Q -O- oder -NH- und Z -O- oder -S- bedeuten und R und R′ unabhängig voneinander Wasserstoff, Halogen, $C_1$-$C_4$-Alkyl, $C_1$-$C_4$-Alkoxy oder Phenoxy sind, und

b) eine Verbindung der Formel II

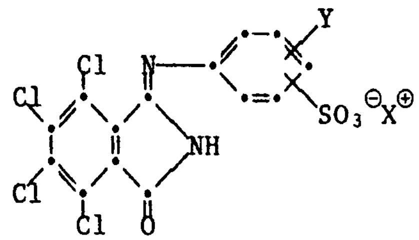

(II),

worin $X^{\oplus}$ $H^{\oplus}$ oder eine Gruppe der Formeln

$$\frac{M^{n\oplus}}{n}$$

oder $N^{\oplus}(R_1)(R_2)(R_3)(R_4)$ darstellt, $M^{n\oplus}$ ein n-wertiges Metallkation, n die Zahlen 1, 2 oder 3, $R_1$, $R_2$, $R_3$, $R_4$ unabhängig voneinander Wasserstoff, $C_1$-$C_{18}$-Alkyl, $C_5$-$C_6$-Cycloalkyl, unsubstituiertes oder durch $C_1$-$C_{18}$-Alkyl substituiertes Phenyl bedeuten oder $R_3$ und $R_4$ zusammen mit dem N-Atom einen Pyrrolidin-, Imidazolidin-, Piperidin-, Piperazin- oder Morpholinrest, oder $R_2$, $R_3$ und $R_4$ zusammen mit dem N-Atom einen Pyrrol-, Pyridin-, Picolin-, Pyrazin-, Chlinolin- oder Isochinolinrest bilden und Y Wasserstoff, Halogen, Methyl oder Amino bedeutet.

**2.** Stoffzusammensetzung gemäss Anspruch 1, dadurch gekennzeichnet, dass sie als Komponente a) eine Verbindung der Formel I enthält, worin A eine Gruppe der Formel

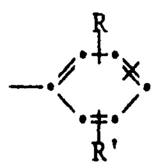

bedeutet, worin R und R′ unabhängig voneinander Wasserstoff, Chlor, Methyl, Methoxy oder Ethoxy sind.

**3.** Stoffzusammensetzung gemäss Anspruch 1, dadurch gekennzeichnet, dass sie als Komponente a) eine Verbindung der Formel I enthält, worin A unsubstituiertes p-Phenylen bedeutet.

**4.** Stoffzusammensetzung gemäss Anspruch 1, dadurch gekennzeichnet, dass sie als Komponente b) eine Verbindung der Formel II enthält, worin $X^{\oplus}$ eine Gruppe der Formel

$$\frac{M^{n\oplus}}{n}$$

bedeutet, worin $M^{n\oplus}$ und n die in Anspruch 1 angegebene Bedeutung haben.

**5.** Stoffzusammensetzung gemäss Anspruch 1, dadurch gekennzeichnet, dass sie als Komponente b) eine Verbindung der Formel II enthält, worin $X^{\oplus}$ eine Gruppe der Formel

$$\frac{M^{n\oplus}}{n}$$

bedeutet, worin $M^{n\oplus}$ ein Alkali-oder Erdalkalikation und n die Zahlen 1 oder 2 bedeuten.

6. Stoffzusammensetzung gemäss Anspruch 5, dadurch gekennzeichnet, dass $M^{n\oplus}$ ein Calciumkation bedeutet.

7. Stoffzusammensetzung gemäss Anspruch 1, dadurch gekennzeichnet, dass das Mengenverhältnis der Komponente a) zur Komponente b) 99 bis 90 Gew.% zu 1 bis 10 Gew.% beträgt.

8. Verfahren zum Färben von hochmolekularem organischem Material, dadurch gekennzeichnet, dass eine Stoffzusammensetzung gemäss Anspruch 1 verwendet wird.

9. Hochmolekulares organisches Material enthaltend eine Stoffzusammensetzung gemäss Anspruch 1.

10. Verbindung der Formel II

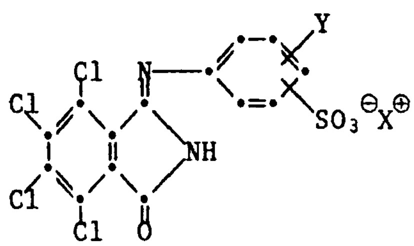

(II),

worin $X^{\oplus}$ $H^{\oplus}$ oder eine Gruppe der Formeln

$$\frac{M^{n\oplus}}{n}$$

oder $N^{\oplus}(R_1)(R_2)(R_3)(R_4)$ darstellt, $M^{n\oplus}$ ein n-wertiges Metallkation, n die Zahlen 1, 2 oder 3, $R_1$, $R_2$, $R_3$, $R_4$ unabhängig voneinander Wasserstoff, $C_1$-$C_{18}$-Alkyl, $C_5$-$C_6$-Cycloalkyl, unsubstituiertes oder durch $C_1$-$C_{18}$-Alkyl substituiertes Phenyl bedeuten oder $R_3$ und $R_4$ zusammen mit dem N-Atomen einen Pyrrolidin-, Imidazolidin-, Piperidin-, Piperazin- oder Morpholinrest, oder $R_2$, $R_3$ und $R_4$ zusammen mit dem N-Atom einen Pyrrol-, Pyridin-, Picolin-, Pyrazin-, Chinolin- oder Isochinolinrest bilden und Y Wasserstoff, Halogen, Methyl oder Amino bedeutet.

11. Verbindung der Formel II gemäss Anspruch 10, dadurch gekennzeichnet, dass $X^{\oplus}$ eine Gruppe der Formel

$$\frac{M^{n\oplus}}{n}$$

mit der in Anspruch 10 angegebenen Bedeutung ist.

12. Verbindung der Formel II gemäss Anspruch 10, dadurch gekennzeichnet, dass $X^{\oplus}$ eine Gruppe der Formel

$$\frac{M^{n\oplus}}{n}$$

bedeutet, worin $M^{n\oplus}$ ein Alkali- oder Erdalkalikation und n die Zahlen 1 oder 2 bedeuten.

13. Verbindung der Formel II gemäss Anspruch 12, dadurch gekennzeichnet, dass $M^{n\oplus}$ ein Calciumkation

bedeutet.

## Claims

**1.** A composition of matter containing
a) an isoindolinone pigment of the formula I

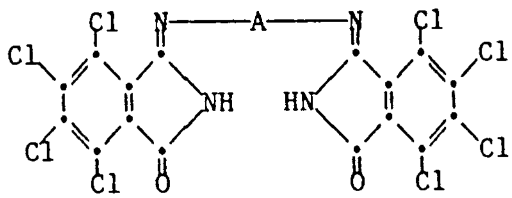

(I)

in which A is one of the groups of the formulae

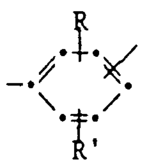

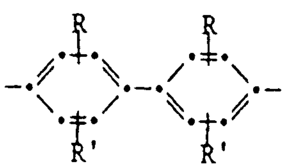

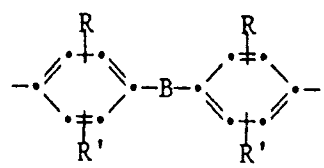

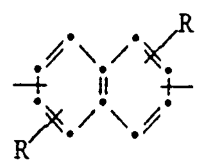

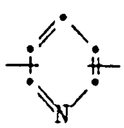

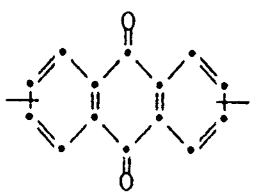

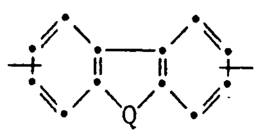

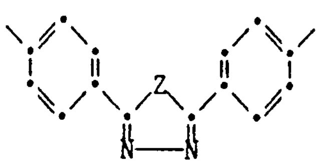

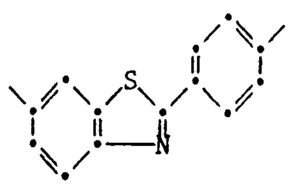

or

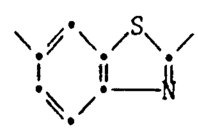

in which B is -O-, -S-, $-SO_2-$, -N = N-, $-CH_2-$, -CH = CH-, $-O-CH_2-O-$

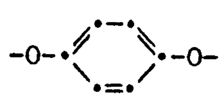

-CONH-, -NHCONH- or -CONHNHCO-, Q is -O- or -NH- and Z is -O- or -S- and R and R' are independently of each other hydrogen, halogen, $C_1$-$C_4$alkyl, $C_1$-$C_4$alkoxy or phenoxy, and
b) a compound of the formula II

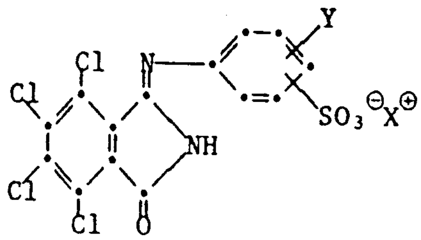

(II)

in which $X^{\oplus}$ is $H^{\oplus}$ or a group of the formulae

$$\frac{M^{n\oplus}}{n}$$

or $N^{\oplus}(R_1)(R_2)(R_3)(R_4)$, $M^{n\oplus}$ is an n-valent metal cation, n is 1, 2 or 3, $R_1$, $R_2$, $R_3$ and $R_4$ are independently of one another hydrogen, $C_1$-$C_{18}$alkyl, $C_5$-$C_6$cycloalkyl, unsubstituted or $C_1$-$C_{18}$alkyl-substituted phenyl or $R_3$ and $R_4$ together with the N atom form a pyrrolidine, imidazolidine, piperidine, piperazine or morpholine radical, or $R_2$, $R_3$ and $R_4$ together with the N atom form a pyrrole, pyridine, picoline, pyrazine, quinoline or isoquinoline radical and Y is hydrogen, halogen, methyl or amino.

**2.** A composition of matter according to claim 1, containing as component a) a compound of the formula I in which A is a group of the formula

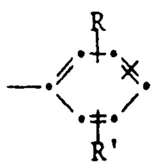

in which R and R' are independently of each other hydrogen, chlorine, methyl, methoxy or ethoxy.

**3.** A composition of matter according to claim 1, containing as component a) a compound of the formula I in which A is unsubstituted p-phenylene.

**4.** A composition of matter according to claim 1, containing as component b) a compound of the formula II in which $X^{\oplus}$ is a group of the formula

$$\frac{M^{n\oplus}}{n}$$

in which $M^{n\oplus}$ and n are as defined in claim 1.

**5.** A composition of matter according to claim 1, containing as component b) a compound of the formula II in which $X^{\oplus}$ is a group of the formula

$$\frac{M^{n\oplus}}{n}$$

in which $M^{n\oplus}$ is an alkali metal or alkaline earth metal cation and n is 1 or 2.

**6.** A composition of matter according to claim 5, wherein $M^{n\oplus}$ is a calcium cation.

7. A composition of matter according to claim 1, wherein the mixing ratio of component a) : component b) is 99 to 90% by weight : 1 to 10% by weight.

8. A process for colouring high molecular weight organic material, which comprises using a composition of matter according to claim 1.

9. A high molecular weight organic material containing a composition of matter according to claim 1.

10. A compound of the formula II

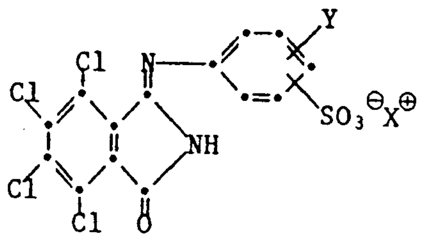

(II)

in which $X^{\oplus}$ is $H^{\oplus}$ or a group of the formulae

$$\frac{M^{n\oplus}}{n}$$

or $N^{\oplus}(R_1)(R_2)(R_3)(R_4)$, $M^{n\oplus}$ is an n-valent metal cation, n is 1, 2 or 3, $R_1$, $R_2$, $R_3$ and $R_4$ are independently of one another hydrogen, $C_1$-$C_{18}$alkyl, $C_5$-$C_6$cycloalkyl, unsubstituted or $C_1$-$C_{18}$alkyl-substituted phenyl or $R_3$ and $R_4$ together with the N atom form a pyrrolidine, imidazolidine, piperidine, piperazine or morpholine radical, or $R_2$, $R_3$ and $R_4$ together with the N atom form a pyrrole, pyridine, picoline, pyrazine, quinoline or isoquinoline radical and Y is hydrogen, halogen, methyl or amino.

11. A compound of the formula II according to claim 10, wherein $X^{\oplus}$ is a group of the formula

$$\frac{M^{n\oplus}}{n}$$

as defined in claim 10.

12. A compound of the formula II according to claim 10, wherein $X^{\oplus}$ is a group of the formula

$$\frac{M^{n\oplus}}{n}$$

in which $M^{n\oplus}$ is an alkali metal or alkaline earth metal cation and n is 1 or 2.

13. A compound of the formula II according to claim 12, wherein $M^{n\oplus}$ is a calcium cation.

## Revendications

1. Composition contenant :
a) un pigment de la série de l'iso-indolinone qui répond à la formule I :

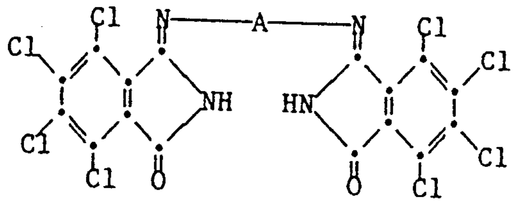 (I)

dans laquelle A représente un radical répondant à l'une des formules :

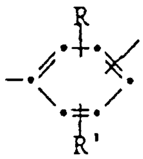

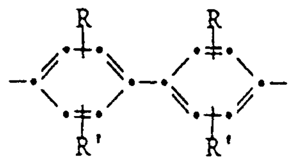

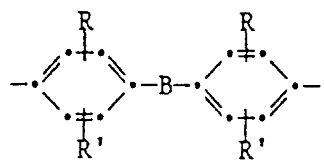

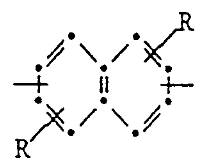

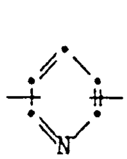

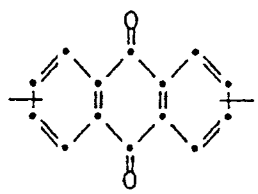

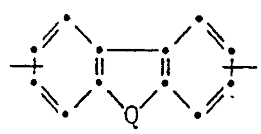

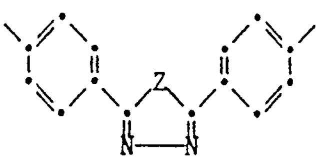

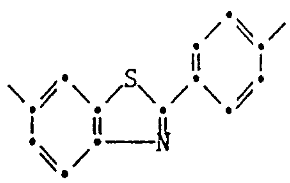

et

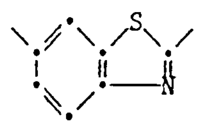

dans lesquelles :

B représente -O-, -S-, $-SO_2-$, -N=N-, $-CH_2-$, -CH=CH-, $-O-CH_2-O-$,

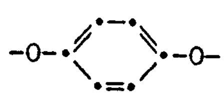 ,

-CONH-, -NHCONH- ou -CONHNHCO-,

Q représente -O- ou -NH-,

Z représente -O- ou -S- et

R et R' représentent chacun, indépendamment l'un de l'autre, l'hydrogène, un halogène, un alkyle en $C_1$-$C_4$, un alcoxy en $C_1$-$C_4$ ou un phénoxy,

et

b) un composé répondant à la formule II :

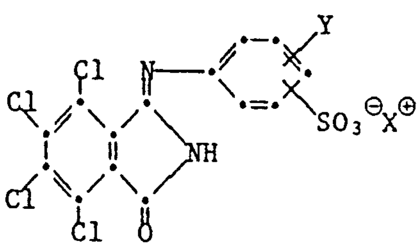

(II)

dans laquelle :

X$^{\oplus}$ représente H$^{\oplus}$, un radical

$$\frac{M^{n\oplus}}{n}$$

ou un radical $N^{\oplus}(R_1)(R_2)(R_3)(R_4)$, $M^{n\oplus}$ représente un cation métallique de valence n, n représente un nombre égal à 1, à 2 ou à 3, $R_1$, $R_2$, $R_3$ et $R_4$ représentent chacun, indépendamment l'un de l'autre, l'hydrogène, un alkyle en $C_1$-$C_{18}$, un cycloalkyle en $C_5$ ou $C_6$, un phényle non substitué ou un phényle porteur d'un alkyle en $C_1$-$C_{18}$, ou $R_3$ et $R_4$ forment ensemble, et avec l'atome d'azote, un radical de pyrrolidine, d'imidazolidine, de pipéridine, de pipérazine ou de morpholine, ou $R_2$, $R_3$ et $R_4$ forment ensemble, et avec l'atome d'azote, un radical de pyrrole, de pyridine, de picoline, de pyrazine, de quinoléine ou d'isoquinoléine, et

Y représente l'hydrogène, un halogène, un méthyle ou un amino.

**2.** Composition selon la revendication 1 caractérisée en ce qu'elle contient, comme composante a), un composé de formule I dans lequel A représente un radical répondant à la formule :

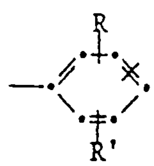

dans laquelle R et R' représentent chacun, indépendamment l'un de l'autre, l'hydrogène, le chlore ou un radical méthyle, méthoxy ou éthoxy.

**3.** Composition selon la revendication 1 caractérisée en ce qu'elle contient, comme composante a), un composé de formule I dans lequel A représente un radical p-phénylène non substitué.

**4.** Composition selon la revendication 1 caractérisée en ce qu'elle contient, comme composante b), un composé de formule II dans lequel X$^{\oplus}$ représente un radical

$$\frac{M^{n\oplus}}{n}$$

dans lequel $M^{n\oplus}$ et n ont les significations qui leur ont été données à la revendication 1.

**5.** Composition selon la revendication 1 caractérisée en ce qu'elle contient, comme composante b), un composé de formule II dans lequel X$^{\oplus}$ représente un radical

$$\frac{M^{n\oplus}}{n}$$

dans lequel $M^{n\oplus}$ représente un cation de métal alcalin ou de métal alcalino-terreux et n le nombre 1 ou le nombre 2.

**6.** Composition selon la revendication 5 caractérisée en ce que $M^{n\oplus}$ représente un cation calcium.

**7.** Composition selon la revendication 1 caractérisée en ce que le rapport entre la quantité de la composante a) et celle de la composante b) est tel qu'il y ait de 99 à 90% en poids de la première pour 1 à 10% en poids de la seconde.

**8.** Procédé pour colorer une matière organique à haut poids moléculaire, procédé caractérisé en ce qu'on utilise une composition selon la revendication 1.

**9.** Matière organique à haut poids moléculaire qui contient une composition selon la revendication 1.

**10.** Composé répondant à la formule II :

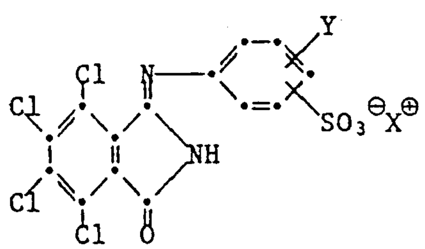

(II)

dans laquelle :

$X^{\oplus}$ représente $H^{\oplus}$, un radical

$$\frac{M^{n\oplus}}{n}$$

ou un radical $N^{\oplus}(R_1)(R_2)(R_3)(R_4)$, $M^{n\oplus}$ représente un cation métallique de valence n, n représente un nombre égal à 1, à 2 ou à 3, $R_1$, $R_2$, $R_3$ et $R_4$ représentent chacun, indépendamment l'un de l'autre, l'hydrogène, un alkyle en $C_1$-$C_{18}$, un cycloalkyle en $C_5$ ou $C_6$, un phényle non substitué ou un phényle porteur d'un alkyle en $C_1$-$C_{18}$, ou $R_3$ et $R_4$ forment ensemble, et avec l'atome d'azote, un radical de pyrrolidine, d'imidazolidine, de pipéridine, de pipérazine ou de morpholine, ou $R_2$, $R_3$ et $R_4$ forment ensemble, et avec l'atome d'azote, un radical de pyrrole, de pyridine, de picoline, de pyrazine, de quinoléine ou d'isoquinoléine, et

Y représente l'hydrogène, un halogène, un méthyle ou un amino.

**11.** Composé de formule II selon la revendication 10 caractérisé en ce que $X^{\oplus}$ représente un radical

$$\frac{M^{n\oplus}}{n}$$

tel que défini à la revendication 10.

**12.** Composé de formule II selon la revendication 10 caractérisé en ce que $X^{\oplus}$ représente un radical

$$\frac{M^{n\oplus}}{n}$$

dans lequel $M^{n\oplus}$ représente un cation de métal. alcalin ou de métal alcalino-terreux et n est égal à 1 ou à 2.

**13.** Composé de formule II selon la revendication 12 caractérisé en ce que $M^{n\oplus}$ représente un cation calcium.